# EUROPEAN PATENT APPLICATION

(11) **EP 2 091 186 A1**
(43) Date of publication of application: **19.08.2009**
(21) Application number: 07845809.8
(22) Date of filing: 05.12.2007
(51) Int. Cl.: H04L 12/56

(54) **A METHOD, NETWORK AND DEVICE OF ROUTING SESSION**

(30) Priority: 08.12.2006 CN 200610153110
(71) Applicant: Huawei Technologies Co., Ltd., Shenzhen, Guangdong Province 518129 (CN)
(72) Inventor: MAO, Lingzhi, Shenzhen Guangdong 518129 (CN); SHI, Youzhu, Shenzhen Guangdong 518129 (CN)
(74) Representative: Thun, Clemens
(86) International application number: PCT/CN2007/003448
(87) International publication number: WO 2008/067728

(57) **Abstract**

The present invention provides a method, network and apparatus for routing sessions so as to route sessions correctly according to the IDs of the domain-related users when the domain-related users are not registered on the IMS network. The method includes: obtaining a wildcard route ID; determining the corresponding domain user ID according to the wildcard route ID; and routing the session through the route set corresponding to the domain user ID.

## Description

### Field of the Invention

The present invention relates to the communication field, and in particular, to a method, network and apparatus for routing sessions.

### Background of the Invention

An IP multimedia subsystem (IMS) is defined by the 3rd Generation Partnership Project (3GPP) standard, and is a target network for the 3^{rd} Generation (3G) mobile network to implement Voice over IP (VoIP) and packet data services and provide uniform multimedia services and applications.

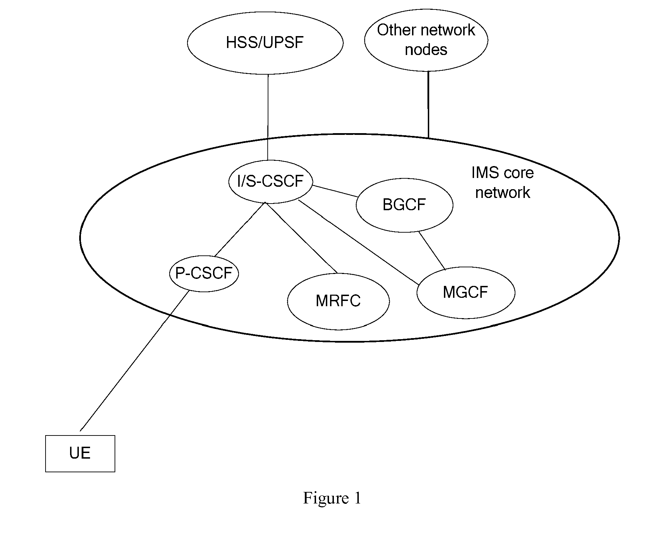

The IMS uses the IP Packet Switched (PS) domain as a bearer channel for its control signaling and media transmission; and uses the Session Initiation Protocol (SIP) for call control signaling to separate service management from session control and bearer. Specifically, the IMS uses the PS domain as a bearer channel for its upper-layer control signaling and media transmission, thus separating the service/control network from the bearer network. The IMS uses the SIP signaling as call control signaling, and works with the Real-Time Protocol/Real-Time Control Protocol (RTP/RTCP), Session Description Protocol (SDP), Real-Time Streaming Protocol (RTSP), and Domain Name System (DNS) to implement the services such as User Equipment (UE) registration, session routing and service triggering in the IMS. Figure 1 shows the architecture of an IMS network.

In Figure 1, the Proxy Call Session Control Function (P-CSCF) is a signaling proxy entity for an IMS UE to access the IMS network, and any signaling that comes from or to the IMS UE needs to pass through the P-CSCF.

The Interrogating/Serving Call Session Control Function (I/S-CSCF) implements call session control.

The Breakout Gateway Control Function (BGCF) selects the network egress.

The Multimedia Resource Function Controller (MRFC) controls the Multimedia Resource Function Processor (MRFP).

The MRFP handles media streams, for example, multi-party conference and audio transcoding.

The Home Subscriber Server/User Profile Server Function (HSS/UPSF) is a user data configuration unit for storing the service-related information such as subscription data of a user.

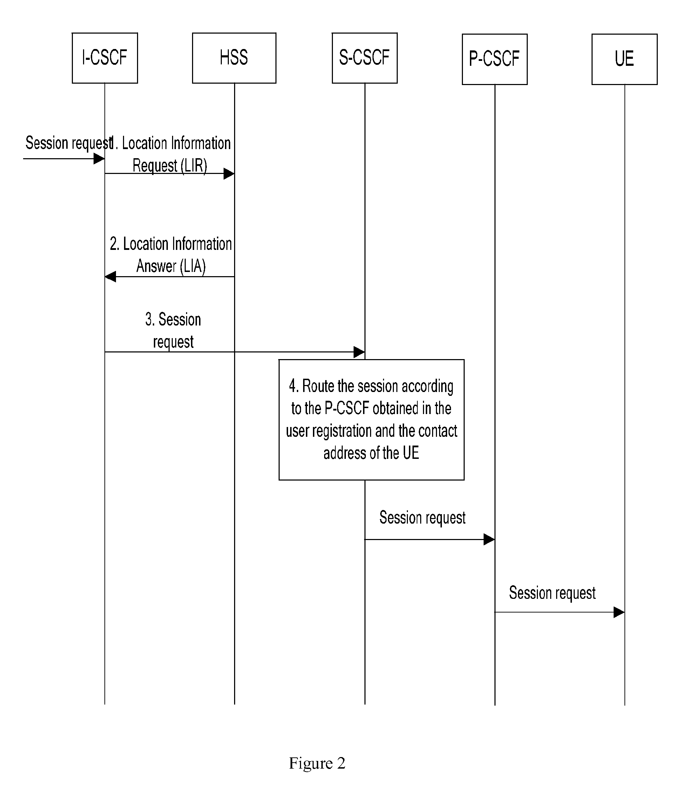

As shown in Figure 2, a typical session routing process with an IMS user being a called party includes the following steps:

(1) After receiving the session request, the I-CSCF sends a Location Information Request (LIR) message to the HSS according to the public identification of the destination user of the session request.

(2) According to the information stored by the destination user in the registration process, the HSS puts the S-CSCF address that serves the user into the Location Information Answer (LIA) message.

(3) The I-CSCF sends a session request to the S-CSCF.

(4) According to the route set information reserved by the destination user of the session request in the registration process, the S-CSCF performs subsequent routing.

The foregoing process shows that, after the session arrives at the called party's network, the HSS assigns the relevant S-CSCF that serves the destination user. After the session arrives at the S-CSCF, the S-CSCF routes the session to the destination user according to the route set information reserved by the destination user in the registration process, that is, the P-CSCF address accessed by the user and the contact address of the user. For details of the IMS user registration and routing, see 3GPP TS.24.229.

Therefore, to route the session to the destination user correctly based on the prior art, the S-CSCF needs to reserve the route set information of the destination user.

When an enterprise network accesses an IMS network, it is necessary to register only one user ID, namely, domain user ID, that represents the identity of the enterprise network. The internal users of the enterprise network, namely, domain-related users, are managed by the enterprise network. Such users can be added and deleted without notifying the IMS network or having an IMS service subscription relation. Therefore, it is not necessary to register each user inside the enterprise network, and the S-CSCF does not reserve the route set information of the users in the enterprise network. For details, see TISPAN WI 1047 and relevant documents.

In the process of research and development, the inventor discovers that, it is impossible to perform correct session routing according to the IDs of domain-related users if the domain-related users are not registered on the IMS network in the case of accessing the IMS network through a domain user ID.

### Summary of the Invention

An embodiment of the present invention provides a method, network and apparatus for routing sessions so as to route sessions correctly according to the IDs of domain-related users when the domain-related users are not registered on the IMS network.

A method for routing sessions in an embodiment of the present invention includes: obtaining, by a call session control unit, the routing set of a session according to the route matching information; and routing, by the call session control unit, the session according to this route set.

A network for routing sessions in an embodiment of the present invention includes: a call session control unit, configured to route a session according to a route set; a storage unit, configured to store the route matching information; a user database, configured to assign the corresponding call session control unit after receiving an LIR; and a route set obtaining unit, configured to obtain the route set of the session according to the route matching information.

A user database provided in an embodiment of the present invention includes: a storage unit, configured to store the route matching information; and an assigning unit, configured to assign a call session control unit according to the route matching information stored in the storage unit after receiving an LIR.

A call session control unit provided in an embodiment of the present invention includes: a storage unit, configured to store the route matching information; a route set obtaining unit, configured to obtain the route set of a session according to the route matching information stored in the storage unit, and notify the route set to a routing unit; and a routing unit, configured to route the session according to the route set obtained by the route set obtaining unit.

In the embodiments of the present invention, when the domain user is registered on the IMS network, for example, registered on the IMS network by using the enterprise network ID, but the domain-related users, for example, the users inside the enterprise network, are not registered on the IMS network, the call session control unit obtains the route set of the session according to the route matching information, and the call session control unit routes the session according to this route set. Therefore, the IMS can route the sessions of unregistered users, thus enhancing the routing capability of the IMS network.

### Brief Description of the Drawings

Figure 1 shows the architecture of an IMS network in the prior art;

Figure 2 is a session routing flowchart where the called party is an IMS user;

Figure 3 is a flowchart of the method in an embodiment of the present invention;

Figure 4 shows the structure of a network for routing sessions in an embodiment of the present invention;

Figure 5 shows the architecture of a user database in an embodiment of the present invention;

Figure 6 shows the structure of a call session control unit in an embodiment of the present invention;

Figure 7 is a signaling flowchart of the method in the first embodiment of the present invention;

Figure 8 shows a UML model of the extended public identification in an embodiment of the present invention; and

Figure 9 is a signaling flowchart of the method in the second embodiment of the present invention.

### Detailed Description of the Invention

In the case of accessing the IMS network through a domain user ID (enterprise network ID), in order to route sessions correctly according to the IDs of the domain-related users (IDs of users in an enterprise network) when the domain-related users are not registered on the IMS network, the following prerequisites need to be met before execution of the method of the present invention:

Prerequisite 1: Route matching information is stored in the HSS or stored in the HSS and the call session control unit. Route matching information includes: a domain user ID, and the corresponding wildcard route ID. The wildcard route ID is configured through the management mode; or obtained according to the registration process of the domain user ID; or configured through an Application Server (AS). The wildcard route ID represents a series of user identities that meet a condition, and can be identified through a wildcard (for example, !*!@huawei.com represents all user identities whose domain name is huawei.com) or identified through other logic expressions, for example, wildcard conditions described through XML.

### <Idcondition >

### < domain>huawei.com</domain>

### </Idcondition>

The foregoing represents the identities of all users whose domain name is huawei.com.

Further, if the route matching information is not configured through the management mode, the following prerequisite need to be met additionally:

Prerequisite 2: The domain user ID is registered on the IMS network.

The domain user ID may be a domain name or an IP address of an enterprise network, for example, sip:huawei.com; or a user ID that identifies an enterprise network, for example, sip:destination@huawei.com; or a wildcard user ID that identifies all users inside an enterprise network, for example, !*!@huawei.com. The registration of the domain user ID may be ordinary IMS registration, or indicated in a Register message.

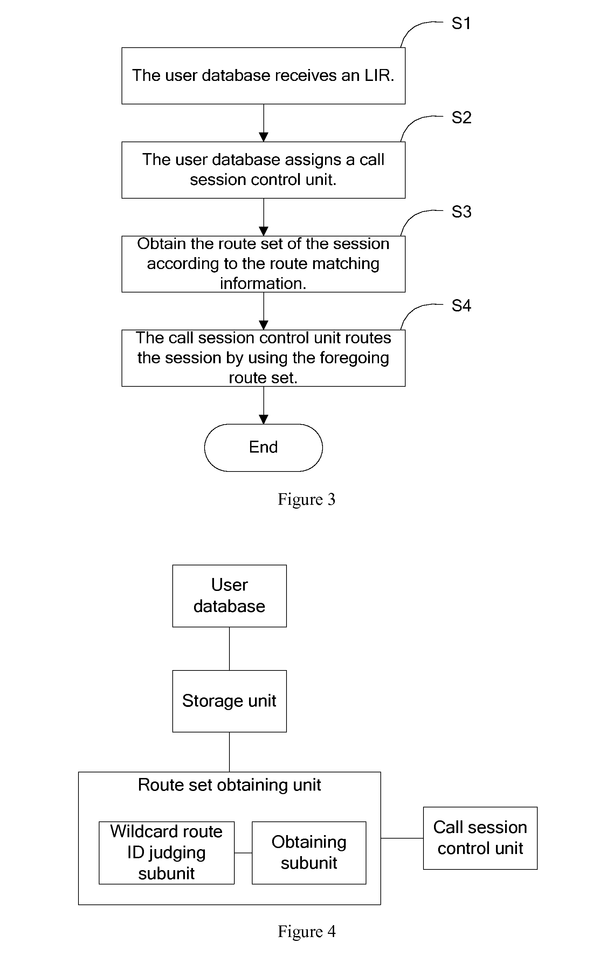

After the foregoing prerequisites are met, as shown in Figure 3, this embodiment includes the following steps:

S1. The user database receives an LIR.

The user database receives an LIR from the call session control unit, with the destination user ID of the session carried in the LIR.

S2. The user database assigns a call session control unit.

The user database matches the called user ID in the LIR message as against the wildcard route ID stored locally. If any wildcard route ID matches, the user database assigns a call session control unit that serves the domain user corresponding to the wildcard route ID.

S3. Obtain the route set of the session according to the route matching information.

The route set is a set of addresses of the nodes on the subsequent session path. For example, a route set may include the address of the proxy session unit accessed by the called party, and the contact address of the destination user of the session request.

The called party herein refers to the destination user of the session request.

S3 involves at least the following two scenarios:

Scenario 1: Through the message forwarding between NEs, after receiving the call request, the call session control unit sends a request message to the user database through the called user ID. The user database matches the called user ID as against the wildcard route ID. When any wildcard route ID matches, the user database sends the corresponding domain user ID or the route set corresponding to the domain ID to the call session control unit; the call session control unit uses the route set corresponding to the domain user ID as the route set of this session, or uses the route set sent by the user database as the route set of this session; further, a wildcard route ID may be sent concurrently so that the session control unit can perform matching and routing directly when receiving a session request again, thus reducing the interaction with the user database and saving the network resources. The call session control unit uses the route set corresponding to the domain user ID or the route set sent by the user database as the route set of this session.

Scenario 2: The user database sends the wildcard route ID to the call session control unit in the process of registering the domain user. Afterward, through the message forwarding between the NEs, after receiving a session request, the call session control unit matches the called user ID in the session request as against the wildcard route ID previously sent by the user database. If any wildcard route ID matches, the call session control unit uses the route set of the domain user corresponding to the matched wildcard route ID as the route set of this session.

S4. The call session control unit routes the session by using the foregoing route set.

In accordance with the foregoing method, an embodiment of the present invention also provides a network for routing sessions. As shown in Figure 4, the network for routing sessions includes: a user database, a storage unit, a route set obtaining unit and a call session control unit connected in sequence; the route set obtaining unit further includes a wildcard route ID judging subunit and an obtaining subunit which are interconnected.

The user database is configured to assign a call session control unit after receiving an LIR. The user database stores the user identity, registration information and service triggering information. In a 3GPP IMS architecture, the user database is called a Home Subscriber Server (HSS). In a TISPAN architecture, the user database is defined as a User Profile Server Function (UPSF) entity, and the communication between the user database and the call session control unit is based on the Diameter protocol.

The storage unit is configured to store the route matching information.

The route set obtaining unit is configured to obtain the route set of a session according to the route matching information stored by the storage unit, and notify the call session control unit of the obtained route set. Further, the wildcard route ID judging subunit is configured to match the called user ID in the session request as against the wildcard route ID stored by the storage unit in the route matching information; and the obtaining subunit is configured to obtain the route set corresponding to the wildcard route ID matched by the wildcard route ID judging subunit.

The call session control unit is configured to provide registration services and session control for the User Equipment (UE). In an IMS network, other call session control units such as the P-CSCF and I-CSCF may exist between the S-CSCF and the UE. The E1 interface between the call session control unit and the UE may be based on SIP.

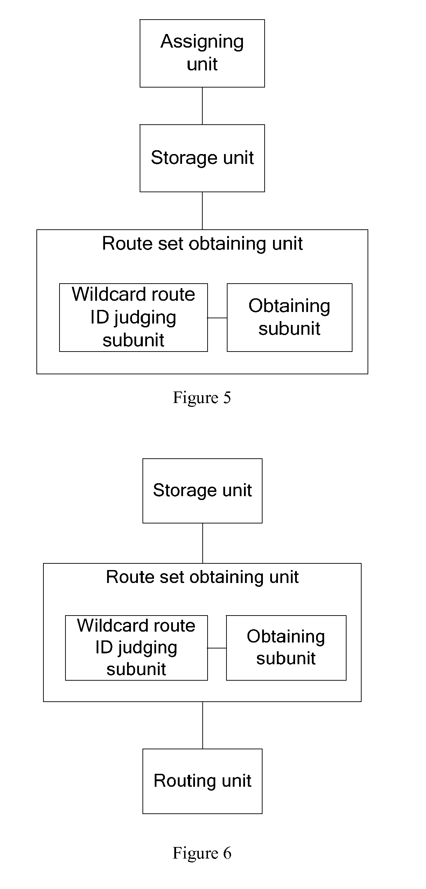

In accordance with the foregoing network, an embodiment of the present invention also provides a user database. As shown in Figure 5, the user database includes: a storage unit, and an assigning unit and a route set obtaining unit connected to the storage unit; the route set obtaining unit further includes a wildcard route ID judging subunit and an obtaining subunit which are interconnected.

The storage unit is configured to store the route matching information, including domain user ID and wildcard route ID.

The assigning unit is configured to assign a call session control unit according to the route matching information stored in the storage unit after receiving an LIR.

The assigning unit is further configured to match the wildcard route ID according to the destination identity in the LIR, and assign a corresponding call session control unit that serves the domain user.

The route set obtaining unit is configured to obtain the route set of a session according to the route matching information stored by the storage unit, and notify the call session control unit of the obtained route set or send route matching information to the call session control unit. Further, the wildcard route ID judging subunit is configured to match the called user ID in the session request as against the wildcard route ID stored by the storage unit in the route matching information; and the obtaining subunit is configured to obtain the route set corresponding to the wildcard route ID matched by the wildcard route ID judging subunit.

In accordance with the foregoing network, an embodiment of the present invention also provides a call session control unit. As shown in Figure 6, the call session control unit includes: a storage unit, a route set obtaining unit connected to the storage unit, and a routing unit connected to the route set obtaining unit; the route set obtaining unit further includes a wildcard route ID judging subunit and an obtaining subunit which are interconnected.

The storage unit is configured to store the route matching information.

The route set obtaining unit is configured to obtain the route set of a session according to the route matching information stored by the storage unit, and notify the routing unit of the obtained route set. Further, the wildcard route ID judging subunit is configured to match the called user ID in the session request as against the wildcard route ID stored by the storage unit in the route matching information; and the obtaining subunit is configured to obtain the route set corresponding to the wildcard route ID matched by the wildcard route ID judging subunit.

The routing unit is configured to route the session according to the route set obtained by the route set obtaining unit.

The method of the present invention is hereinafter described in detail through two embodiments.

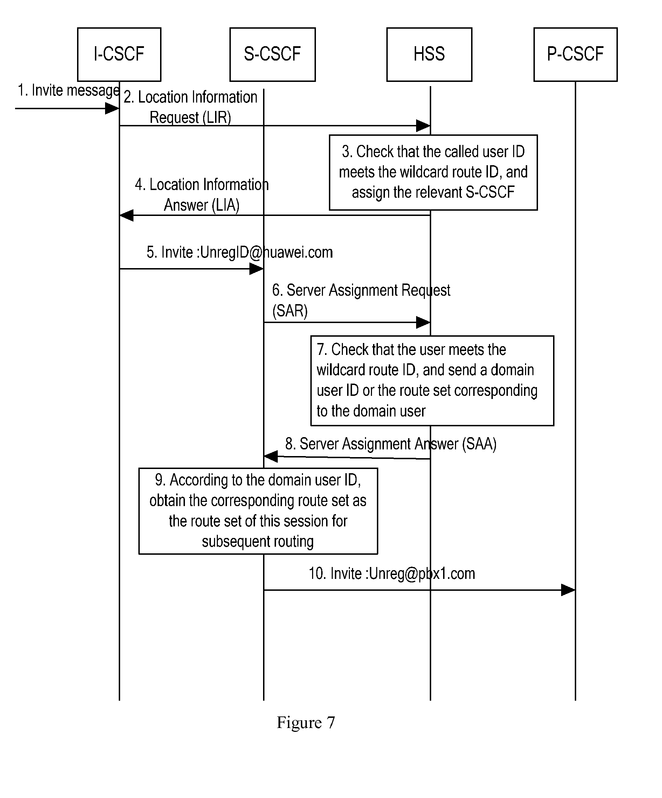

Embodiment 1: The HSS sends routing information to the S-CSCF in the session setup process. As shown in Figure 7, the method includes the following steps:

1. The session request is routed to the I-CSCF of the destination network.

The session request carries the called user ID: UnRegId@huawei.com, which is not registered on the IMS network currently.

2. The I-CSCF sends a Location Information Request (LIR) message to the HSS to query for the address of the S-CSCF that serves the I-CSCF, with UnRegId@huawei.com carried in the LIR.

3. After the HSS receives the LIR message, because UnRegId@huawei.com has not been registered on the HSS, the HSS judges whether the session request directed to the user meets the conditions for subsequent routing according to the wildcard route ID stored locally.

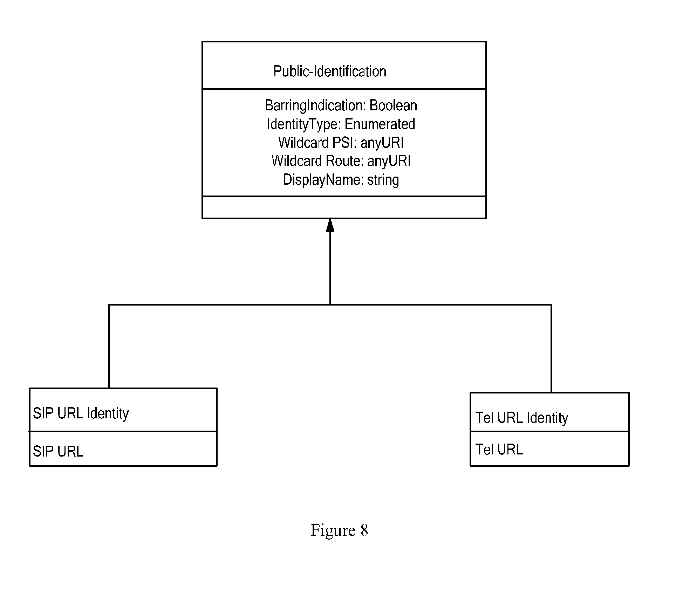

The data structure may be extended on the HSS to store the wildcard route ID. For example, the data structure of the public identification stored on the HSS may be extended. The UML model of the extended public identification is shown in Figure 8. A "wildcard route" field is added in the public identification for storing the wildcard route ID. In this example, the "wildcard route" field of the public identification is set to "!*!@huawei.com", indicating that all user identities with the domain name "huawei.com" meet the wildcard route ID.

The wildcard route ID may be configured in the HSS through the management mode. For example, configure the domain user ID and the corresponding wildcard route ID in the HSS through the operation and maintenance interface; and enable subsequent routing for the user IDs that meet the wildcard route ID even if the user IDs are not registered. Or the AS configures the wildcard route ID through an Sh interface. Or, in the registration process initiated through a domain user ID, the wildcard route ID obtained by the HSS and/or the S-CSCF may be wildcard routing information carried in a Register message, for example, the "To" header field carried in the Register message is "!*!@huawei.com", indicating that the wildcard route ID meets the conditions for subsequent routing for all users with the domain name "huawei.com". In another example, the "To" header field carried in the Register message is "2878!*!", indicating that the wildcard route ID meets the conditions for subsequent routing for all sessions with the "2878" field, namely, the registered domain user ID is the wildcard user ID. If the registered domain user ID is not a wildcard user ID, for example, "huawei.com" or "destination@huawei.com", the HSS and/or the S-CSCF can also make a correlation to the corresponding wildcard route ID according to the registration of the domain user ID, for example, configuring the route wildcard condition corresponding to a domain user ID through configuration management.

The HSS determines that the destination user identity directed to the session meets the conditions for subsequent routing, and assigns a relevant S-CSCF to the session request. The relevant S-CSCF is the S-CSCF that serves the domain user.

4. Through an LIA message, the HSS returns the information about the S-CSCF to the I-CSCF.

5. The I-CSCF sends an INVITE request to the S-CSCF assigned by the HSS.

6. According to the method for handling an unregistered user as specified in the 3GPP 24.229, the S-CSCF sends a Server Assignment Request (SAR) message to the HSS, requesting to download the user-related data.

The SAR message carries the called user ID of this session - "UnRegId@huawei.com".

7. According to the called user ID UnRegId@huawei.com carried in the SAR message, the HSS determines that the called user ID meets the locally stored wildcard route ID (same as the relevant contents in step 3).

8. Through a Server Assignment Answer (SAA) message, the HSS sends the routing information to the S-CSCF.

The routing information contains at least the domain user ID corresponding to the wildcard matching conditions met by the UnRegId@huawei.com, or the route set corresponding to the domain user ID.

(a) When the route set contains a domain user ID:

Method 1 for transferring a domain user ID:

A new Diameter Attribute Value Pair (AVP) is extended in the Diameter protocol message sent by the HSS.
Destination-ID ::= <AVP header: xxx 10415>
[URI]
where, the URI carries the domain user ID, and may have the value "TEL URI" or "SIP URI".

For example, the URI is set to "destination@huawei.com", instructing the S-CSCF to use the route set corresponding to "destination@huawei.com" as the route set of this session.

Method 2 for transferring a domain user ID:

The public identification information (the model of the extended public identification is shown in Figure 8) sent by the HSS carries a domain user ID. Further, to indicate that the ID carried in the public identification information is a domain user ID, a new enumeration type is added in the "identity type" attribute, for example, "Destination Route" type. The public identification of this type is regarded as a domain user ID.

Because the domain user ID has been registered on the IMS network and the S-CSCF has recorded its registration path, the registration path of the domain user ID may be used as a route set of the session to route the session.

(b) When the routing information contains a route set, the HSS may use an SAA message to carry the extended Diameter AVP.
Route-set ::= <AVP header: xxx 10415>
[P-addr]
[C-addr]
where, the p-addr identifies the P-CSCF address accessed by the user; and the C-ADDR identifies the contact address of the user.

Therefore, the S-CSCF can use the route address contained in the AVP as a route set of the session.

Preferably, the HSS may send a wildcard route ID to the S-CSCF. In this way, after receiving a session request again, the S-CSCF may judge whether the called user ID meets the conditions for subsequent routing as against the wildcard route ID, and then route the session request through the route set corresponding to the domain user ID, thus reducing the message interaction between the HSS and the S-CSCF.

Preferably, for the purpose of matching the corresponding service configuration of the user when the S-CSCF matches the route set of the called party, an additional indication may be transferred through an extended Diameter AVP, to notify the S-CSCF to use the service profile corresponding to the domain user as the service profile of the called party in this session for subsequent processing. This purpose can be achieved in other ways, for example, using the "wildcard PSI" field of the public identification attribute to carry a wildcard route ID; or setting a public identification attribute, for example, "Route & Service", as a new enumeration type to instruct the S-CSCF to use the route set and the service profile corresponding to the domain user as the route set and service profile of this session for subsequent processing.

9. According to the routing information in the SAA message, the S-CSCF obtains the route set corresponding to the domain user ID, and uses it as the route set of this session; or uses the route set sent by the HSS as the route set of this session.

Optionally, in step 4, the HSS may return a route set to the I-CSCF, and the I-CSCF transfers the route set to the S-CSCF.

Optionally, in step 8, the HSS returns a service profile corresponding to the domain user to the S-CSCF, with the service profile carrying the route set corresponding to the domain user. The S-CSCF executes the service profile such as an initial filtering condition (iFC). The corresponding AS name in the last iFC is the route address corresponding to the domain user, and the S-CSCF uses it as the path for routing this session.

10. Use this route set for subsequent routing.

After the session request is routed to the domain user, namely, enterprise network, the enterprise network routes the session request to the called party. Therefore, the users inside the enterprise network can perform session routing correctly according to the user IDs inside the enterprise network without being registered on the IMS network.

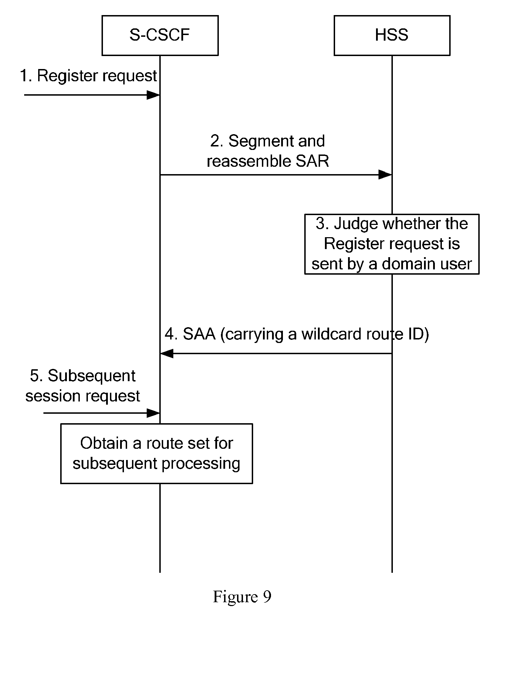

Embodiment 2: The HSS sends routing information to the S-CSCF that serves the domain user when registering the domain user ID. As shown in Figure 9, the method includes the following steps:

1. The S-CSCF receives a Register request sent through a domain user ID.

2. The S-CSCF sends an SAR message to the HSS to register the user, with the domain user ID carried in the SAR message.

3. According to the preset information, the HSS judges whether the Register request is sent by the domain user as against the domain user ID.

For that purpose, it is necessary to extend the attribute of the public identification stored on the HSS, and add a new "identity type", for example, add a new "destination route" type, to identify that the user ID corresponding to this public identification is a domain user. Therefore, the domain user, namely, the user that meets the wildcard route ID, can perform routing according to the route set corresponding to the domain user. A new "wildcard URI" type can be added to identify the wildcard route ID.

4. The HSS sends a wildcard route ID to the S-CSCF.

An SAA message may carry an extended Diameter AVP, for example,
Matched-route ::= <AVP header: xxx 10415>
[wildcared URI]

The wildcard URI represents a wildcard route ID. For example, the wildcard URI can be set to "!*1@huawei.com" to represent all the user IDs with the domain name "huawei.com". The wildcard route ID can also be carried in other ways, for example, carried in the extended "wildcard route" attribute in the public identification shown in Figure 8.

Optionally, same as in step 3 in the first embodiment, the S-CSCF may obtain the wildcard route ID in the process of requesting registration of the domain user ID.

5. When receiving an initial session request such as an INVITE message, the S-CSCF judges whether the session meets the conditions as against the wildcard route ID, and if so, handles the session according to the route set corresponding to the domain user ID.

Similarly to the first embodiment, the S-CSCF checks the called user ID, such as UnRegId@huawei.com, carried in the session request; if the called user ID matches the wildcard route ID, the S-CSCF obtains the registration route path corresponding to the domain user, and uses it for routing the session request; or the S-CSCF handles the service profile, such as iFC, corresponding to the domain user ID to obtain the route address corresponding to the domain user, and uses the route address to route the session request.

After the subsequent session request is routed to the domain user, namely, enterprise network, the enterprise network routes the session request to the called party. Therefore, the users inside the enterprise network can perform session routing correctly according to the user IDs inside the enterprise network without being registered on the IMS network.

In this embodiment, the HSS may send the route matching information (wildcard route ID) to the S-CSCF in processes other than in the process of initiating registration through a domain user ID. For example, in the process of pushing the user profile, the HSS lets the profile carry the route matching information, that is, it sends a Profile Push Request (PPR) message to the S-CSCF, with the route matching information carried in the PPR message.

To sum up, in the embodiments of the present invention, if the domain user is registered on the IMS network, for example, registered on the IMS network by using an enterprise network ID, but the domain-related users, for example, the users inside the enterprise network, are not registered on the IMS network, the user database assigns a call session control unit according to the route matching information after receiving an LIR, and then obtains the route set of the session according to the route matching information; and the call session control unit routes the session according to this route set. Therefore, the IMS can route the sessions of unregistered users, thus enhancing the routing capability of the IMS network.

Further, the user database transfers the route matching information and the route set corresponding to the domain user to the call session control unit by extending the Diameter AVP; or, the user database transfers the domain user ID to the call session control unit by extending the public identification information, and transfers a wildcard route ID to the call session control unit by extending the Diameter AVP; or, the user database transfers a domain user ID to the call session control unit by extending the Diameter AVP.

The wildcard route ID is configured through the management mode; or obtained by the user database according to the information reported in the process of registering the domain user ID; or configured through an AS.

Although the invention has been described through some exemplary embodiments, the invention is not limited to such embodiments. It is apparent that those skilled in the art can make various modifications and variations to the present invention without departing from the scope of the present invention. The present invention is intended to cover these modifications and variations provided that they fall in the scope of protection defined by the following claims or their equivalents.

## Claims

1. A method for routing sessions, comprising:
A. obtaining a wildcard route ID; and,
B. routing a session according to a route set corresponding to the wildcard route ID.

2. The method of claim 1, wherein obtaining a wildcard route ID comprises:
when a domain user register, the database unit send the wildcard route ID to a CSCF, wherein,
the routing set corresponding to the wildcard route ID is the routing set corresponding to the registered domain user.

3. The method of claim 2, wherein,
the CSCF save the wildcard route ID, and, a domain user ID corresponding to the wildcard route ID or the routing set corresponding to the domain user ID.

4. The method of claims 2 to 3,wherein,
before step B,the user database assign the CSCF serving the domain user corresponding to the wildcard route ID.

5. The method of claims 1 to 2, wherein,
the routing the session according to a route set corresponding to the wildcard route ID comprises:
after receiving a session request, matching, by the CSCF, wildcard route ID and the user ID of the reveived session request, when the wildcard route ID matches, routing the session, by the CSCF, according to the route set of the dimain user corresponding to the matched wildcard route ID.

6. The method of claim 2, wherein,
the user database sends the wildcard route ID and the route set to the CSCF by extending a Diameter AVP, or,
the user database sends the matched route ID and the domain user ID to the CSCF by extending a public identification information and sends the wildcard route ID to the CSCF by extending a Diameter AVP, or,
the user database sends the dimain user ID to the CSCF by extending a Diameter AVP.

7. The method of claim 6, wherein,
the wildcard route ID is configured through management mode, or obtained by the user database from the register reporting information according to the domain user ID, or configured by the AS.

8. The method of claims 2 or 6, wherein,
the user database saves or identifies the wildcard route ID by adding a identification class or by extending a public identification class.

9. The method of cliams 2 to 3, wherein,
the CSCF saves or identifies the wildcard route ID by adding a identification class or by extending a public identification class.

10. A network for routing sessions, comprising:
a call session control unit, configured to route a session according to a route set;
a storage unit, configured to store the route matching information;
a user database, configured to assign a corresponding call session control unit after receiving an LIR; and
a route set obtaining unit, configured to obtain the route set of the session according to the route matching information.

11. The network of claim 10, wherein the route set obtaining unit comprises:
a wildcard route ID judging subunit, configured to match the called user ID in the session request as against the wildcard route ID stored by the storage unit in the route matching information;
an obtaining subunit, configured to obtain the route set corresponding to the wildcard route ID matched by the wildcard route ID judging subunit.

12. A user database for routing sessions, comprising:
a storage unit, configured to store the route matching information;
and an assigning unit, configured to assign a call session control unit according to the route matching information stored in the storage unit after receiving an LIR.

13. The user database of claim 12, comprising:
a route set obtaining unit, configured to obtain the route set of a session according to the route matching information stored by the storage unit, and notify the call session control unit of the obtained route set or send route matching information to the call session control unit.

14. The user database of claim 12, wherein the assigning unit is further configured to match the wildcard route ID according to the destination identity in the LIR, and assign a corresponding call session control unit that serves the domain user.

15. The user database of claim 12, wherein the route set obtaining unit comprises:
a wildcard route ID judging subunit, configured to match the called user ID in the session request as against the wildcard route ID stored by the storage unit in the route matching information; and,
a obtaining subunit, configured to obtain the route set corresponding to the wildcard route ID matched by the wildcard route ID judging subunit.

16. A call session control unit for routing sessions, comprising:
a storage unit, configured to store the route matching information;
a route set obtaining unit, configured to obtain the route set of a session according to the route matching information stored in the storage unit, and notify the route set to a routing unit; and,
a routing unit, configured to route the session according to the route set obtained by the route set obtaining unit.

17. the call session control unit of claim 16,wherein the a route set obtaining unit comprises :
a wildcard route ID judging subunit, configured to match the called user ID in the session request as against the wildcard route ID stored by the storage unit in the route matching information; and
a obtaining subunit, configured to obtain the route set corresponding to the wildcard route ID matched by the wildcard route ID judging subunit.
